# EUROPÄISCHE PATENTSCHRIFT

(11) **EP 2 982 234 B1**
(45) Veröffentlichungstag und Bekanntmachung des Hinweises auf die Patenterteilung: **17.05.2017**
(21) Anmeldenummer: 15176389.3
(22) Anmeldetag: 13.07.2015
(51) Int. Cl.: A01D 61/00, A01D 61/02, B65G 15/52

(54) **SCHRÄGFÖRDERER FÜR EINEN MÄHDRESCHER MIT FLEXIBLEN ZUGMITTELN UND ABNEHMBAREN SCHRAUBBOLZEN ZUR ANBRINGUNG VON FÖRDERLEISTEN**
INCLINED CONVEYOR FOR AN AGRICULTURAL COMBINE HARVESTER HAVING FLEXIBLE TRACTION ELEMENTS AND REMOVABLE BOLTS FOR ATTACHING CONVEYOR SLATS
CONVOYEUR INCLINÉ D'UNE MOISSONNEUSE-BATTEUSE AYANT DES MOYENS DE TRACTION SOUPLES ET DES BOULONS AMOVIBLES DESTINÉ À INSTALLER DES BARRES DE TRANSPORT

(30) Priorität: 08.08.2014 DE 102014215762
(43) Veröffentlichungstag der Anmeldung: 10.02.2016
(73) Patentinhaber: Deere & Company, Moline, IL 61265 (US)
(72) Erfinder: Rittershofer, Martin, 67663 Kaiserslautern (DE); Fuchs, Volker, 54439 Saarburg (DE); Mulder, Arjan, 9640 Veendam (NL); van Wolde, Harm-Jan, 9640 Veendam (NL)
(74) Vertreter: Holst, Sönke

(56) Entgegenhaltungen:
- EP-A1- 1 092 657
- DE-A1-102009 036 104
- GB-A- 2 004 518
- US-A- 4 697 693

## Beschreibung

Die Erfindung betrifft einen Schrägförderer für einen Mähdrescher, umfassend:
ein Gehäuse mit einer unteren Umlenkwalze und einer oberen Umlenkwalze, von denen mindestens eine durch einen Antrieb in Drehung um ihre Längsachse versetzbar ist,
und einen Endlosförderer mit wenigstens zwei um die Umlenkwalzen umlaufenden, in axialer Richtung der Umlenkwalzen zueinander versetzten Zugmitteln aus in sich flexiblem Material, zwischen denen sich entlang der Länge der Zugmittel verteilte Förderleisten erstrecken,
wobei die Innenseiten der Zugmittel mit Nocken aus in sich flexiblem Material versehen sind, die mit der antreibbaren Umlenkwalze drehmomentübertragend zusammenwirken,
die Förderleisten durch Schraubbolzen mit den Zugmitteln verbunden sind,
die Schraubbolzen Köpfe aufweisen, die jeweils in einen der Nocken eingebettet sind und an einer in den Nocken integrierten Ankerplatte anliegen,
und die Schraubbolzen sich durch Löcher der Ankerplatte und des Zugmittels erstrecken.

### Stand der Technik

Mähdrescher dienen zur Ernte der Früchte von landwirtschaftlich angebauten Pflanzen, die mittels eines Erntevorsatzes aufgenommen und durch einen Schrägförderer in den eigentlichen Mähdrescher hinein gefördert werden. Dort werden die Pflanzen gedroschen und die gewonnenen Nutzteile gereinigt. Schrägförderer umfassen ein Gehäuse, in dem ein Endlosförderer mit mehreren seitlich nebeneinander angeordneten Zugmitteln um eine untere und eine obere Umlenkwalze umläuft und das Material unterschlächtig nach oben in den Mähdrescher hinein fördert. Der Endlosförderer umfasst Förderleisten, die an jeweils zwei Zugmitteln befestigt sind, um das Material zu fördern.

Die als gattungsbildend angesehene DE 10 2009 036 104 A1 beschreibt einen Schrägförderer, dessen Zugmittel aus endlos gewickelten Nockenriemen aus gewebelagenverstärktem, vernetztem Polymer bestehen. Die Nocken sind an der Innenseite des Riemens angebracht und wirken mit Nockenrädern zusammen, von denen eines zum Antrieb des Riemens dient. Die Förderleisten werden durch Schraubbolzen mit dem Riemen verbunden, deren Köpfe jeweils in einen Nocken einvulkanisiert sind und an einer flächenmäßig größeren Ankerplatte anliegen, die ebenfalls mit in den Nocken integriert ist. Die eigentlichen Bolzen erstrecken sich durch Löcher im Riemen, in welche Buchsen eingesetzt sein können, und dienen an der Außenfläche des Riemens zur Anbringung einer Förderleiste. Bei einer anderen Ausführungsform erfolgt die Befestigung der Förderleisten zwischen benachbarten Nocken durch Schrauben oder Nieten.

Bei der Ausführungsform mit in die Nocken einvulkanisierten Köpfen ergibt sich der Nachteil, dass ein Austausch eines defekten Schaubbolzens nicht möglich ist. Ein Austausch ist bei der anderen Ausführungsform zwar denkbar, jedoch ergibt sich hierbei der Nachteil, dass der Schraubenkopf und die Ankerplatte zwischen benachbarten Nocken auf der Antriebsseite des Riemens angeordnet sind, was dazu führt, dass die Nockenräder nicht bis auf den Grund des Riemens zwischen den Nocken eindringen können, was die Drehmomentübertragung begrenzt.

Die US 2 743 829 A beschreibt ein Straßenreinigungsfahrzeug mit einem Endlosförderer, der sich aus zwei um Umlenkwalzen umlaufenden Nockenriemen zusammensetzt, die durch Mitnehmerleisten untereinander verbunden sind. Die Anbringung der Mitnehmerleisten erfolgt durch in abnehmbare Nocken eingebettete Gewindebolzen. Die Nocken befinden sich an der Innenseite der Nockenriemen. Die Gewindebolzen sind mit in den Nocken eingebetteten Halteplatten verschweißt (oder auf andere Weise daran befestigt), welche die Gewindebolzen im abnehmbaren Nocken fixieren. Die Gewindebolzen erstrecken sich durch den Riemen und an deren Außenseite durch Bohrungen in den Mitnehmerleisten, die durch Muttern am Riemen fixiert werden.

Die US 4 697 693 A beschreibt einen anderen Endlosförderer mit Nockenriemen und daran angeschraubten Förderleisten. Die Köpfe der Schrauben liegen an Platten an, die wiederum an der äußeren Oberfläche der Nocken anliegen. Die eigentlichen Schrauben erstrecken sich durch Bohrungen in den Platten, durch die Nocken und den Riemen und durch Löcher der Förderleisten hindurch und werden durch Muttern fixiert.

Bei den Förderern nach US 2 743 829 A und US 4 697 693 A sind zwar die Nocken mit den Schraubbolzen bzw. die Schrauben abnehmbar, sodass die Befestigungsmittel der Mitnehmerleisten im Schadensfalle austauschbar sind, jedoch ist in der US 2 743 829 A nur ganze Nocken austauschbar und es ist eine Schweißverbindung zwischen den Halteplatten und den Gewindebolzen vorgesehen, während in US 4 697 693 A keine drehmomentschlüssige Verbindung zwischen den Platten und den Schrauben vorgesehen ist, sodass die Schraubenköpfe beim Anziehen der Muttern durch separate Haltemittel (Schraubenschlüssel) zu fixieren sind.

### Aufgabe

Die vorliegende Erfindung hat sich zur Aufgabe gesetzt, einen verbesserten Schrägförderer bereitzustellen, der die erwähnten Nachteile nicht oder in vermindertem Ausmaße aufweist.

### Erfindung

Die vorliegende Erfindung wird durch die Ansprüche definiert.

Ein Schrägförderer für einen Mähdrescher umfasst ein Gehäuse mit einer unteren Umlenkwalze und einer oberen Umlenkwalze, von denen mindestens eine durch einen Antrieb in Drehung um ihre Längsachse versetzbar ist und einen Endlosförderer mit wenigstens zwei um die Umlenkwalzen umlaufenden, in axialer Richtung der Umlenkwalzen zueinander versetzten Zugmitteln aus in sich flexiblem Material, zwischen denen sich entlang der Länge der Zugmittel verteilte Förderleisten erstrecken. Die Innenseiten der Zugmittel sind mit Nocken aus in sich flexiblem Material versehen, die mit der antreibbaren Umlenkwalze drehmomentübertragend zusammenwirken. Die Förderleisten sind durch Schraubbolzen mit den Zugmitteln verbunden. Die Schraubbolzen weisen Köpfe auf, die jeweils in einen der Nocken eingebettet sind und an einer in den Nocken integrierten Ankerplatte anliegen. Die Schraubbolzen erstrecken sich durch Löcher der Ankerplatte und des Zugmittels. Die Schraubbolzen sind vom Zugmittel abnehmbar. Dadurch wird ein Austausch eines eventuell beschädigten Schraubbolzens und somit eine Reparatur des Schrägförderers ohne Austausch der Zugmittel problemlos möglich. Die Schraubbolzen sind in ihren sich durch Löcher der Ankerplatten erstreckenden Bereichen formschlüssig mit der Ankerplatte gekoppelt, um die Schraubbolzen gegenüber einer Drehbewegung zu fixieren. Somit wird ein Festziehen einer Mutter an der Außenseite der Förderleisten ohne zusätzliches Werkzeug zum Festhalten der Schraubbolzen möglich.

Bei einer möglichen Ausführungsform sind die mit dem Schraubbolzen versehenen Nocken vom Zugmittel abnehmbar. Hierbei können die die Schraubbolzen vom Nocken abnehmbar (insbesondere wie im folgenden Absatz beschrieben) oder unlösbar damit verbunden sein.

Bei einer anderen Ausführungsform sind die mit dem Schraubbolzen versehenen Nocken unlösbar mit dem Zugmittel verbunden und die Schraubbolzen vom Nocken abnehmbar, was insbesondere durch eine innenseitige, dem Kopf des Schraubbolzens benachbarte Öffnung des Nockens hindurch erfolgen kann.

Die axiale Abmessung der Bereiche, in denen sich die Schraubbolzen durch die Löcher der Zugmittel erstrecken, kann zumindest etwa der Dicke des Zugmittels entsprechen. In diesen Bereichen sind die Schraubbolzen vorzugsweise kreiszylindrisch, was eine Beschädigung des Zugmittels durch den Schraubbolzen vermeidet. Auch kann der Durchmesser der Schraubbolzen größer als der Gewindedurchmesser der Schraubbolzen und der Durchmesser einer Öffnung in der Förderleiste sein, durch welche sich der Schraubbolzen erstreckt. Dadurch erreicht man, dass die Förderleiste nicht stärker angezogen werden kann als der Lebensdauer des Zugmittels zuträglich ist.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einem Schrägförderer,
- Fig. 2: einen Schnitt durch das Zugmittel des Schrägförderers und eine daran befestigte Förderleiste,
- Fig. 3: eine perspektivische Ansicht eines Nockens mit daran angebrachten Schraubbolzen,
- Fig. 4: eine perspektivische Ansicht eines Schraubbolzens, und
- Fig. 5: eine perspektivische Ansicht einer Ankerplatte.

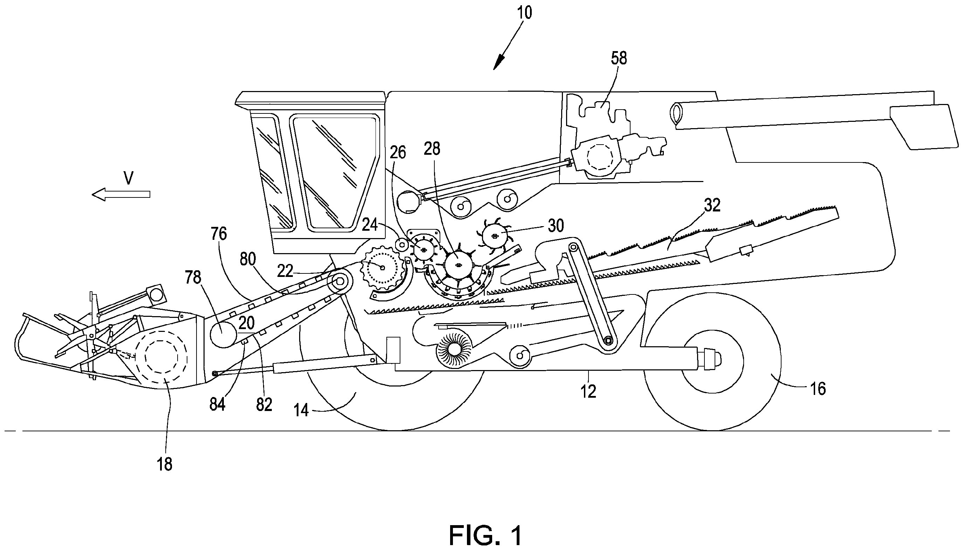

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Anstelle des gezeigten Mehrtrommeldreschwerks kann eine beliebige, andere Dresch- und Trenneinrichtung Verwendung finden.

Der Schrägförderer 20 umfasst ein Gehäuse 76, an dessen unterem, vorderen Ende eine untere Umlenkwalze 78 und an dessen oberem, hinteren Ende eine obere Umlenkwalze 80 angeordnet ist. Beide Umlenkwalzen 78, 80 erstrecken sich quer zur Vorwärtsrichtung und horizontal. Um die Umlenkwalzen 78, 80 laufen Zugmittel 82 in Form von Riemen aus in sich flexiblem Material um, von denen zwei, drei oder mehrere seitlich beabstandet voneinander angeordnet sind. Wenigstens eine der Umlenkwalzen 78, 80 ist durch einen Antriebsstrang mit einem Verbrennungsmotor 58 verbunden, um sie im Erntebetrieb in Drehung zu versetzen. Zwischen zwei benachbarten Zugmitteln 82 erstrecken sich Förderleisten 84. Die Förderleisten 84 sind mit den Zugmitteln 82 lösbar verschraubt. Im Erntebetrieb arbeitet der Schrägförderer 20 unterschlächtig, d.h., das Erntegut wird unterhalb der Zugmittel 82 am Boden des Gehäuses 76 des Schrägförderers 20 nach oben gezogen.

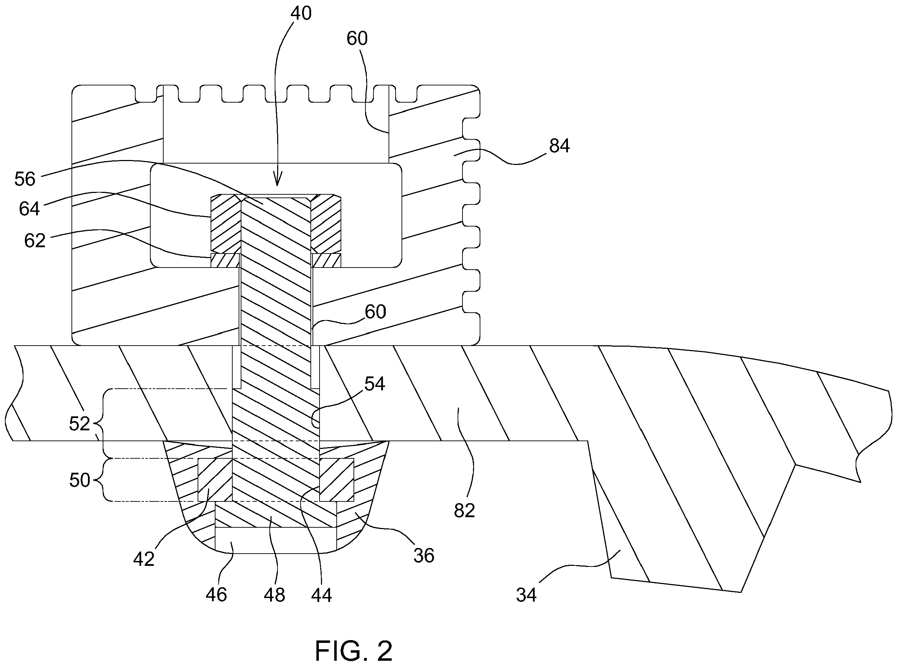

Die Zugmittel 82 entsprechen an sich den aus der DE 10 2009 036 104 A1, deren Offenbarung durch Verweis mit in die vorliegenden Unterlagen einbezogen wird, bekannten Nockenriemen. Es wird nun auf die Figur 2 verwiesen. An den Zugmitteln 82 sind innenseitig Nocken 34, 36 angebracht, die zum Übertragen des Antriebsmoments der angetriebenen Umlenkwalze 78 oder 80 dienen. Die angetriebene Umlenkwalze 78 oder 80 ist dazu mit Antriebselementen ausgestattet, die zwischen zwei benachbarten Nocken 34, 36 eingreift.

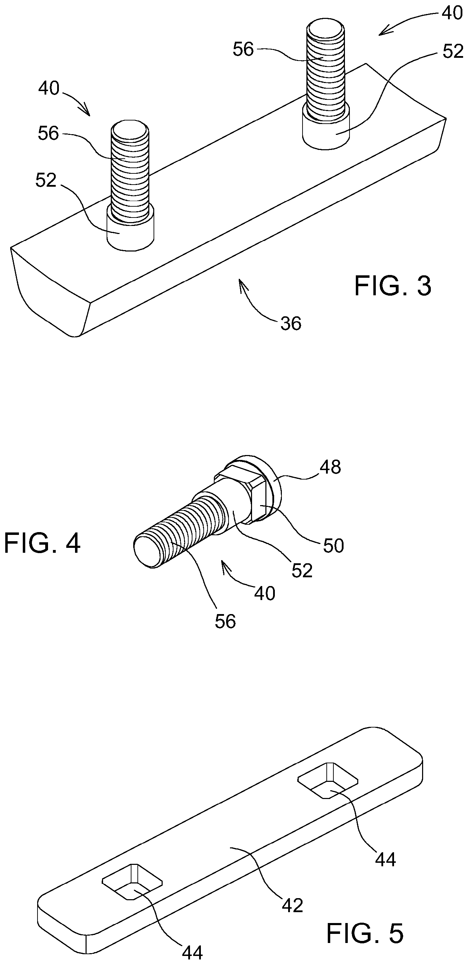

Während einige Nocken 34 (in der Figur 2 rechts eingezeichnet) fest am das Zugmittel 82 angebracht (z.B. anvulkanisiert) sind und aus Vollmaterial bestehen, dienen andere Nocken 36 zusätzlich zur Befestigung der Förderleisten 84 durch Schraubbolzen 40. Diese Nocken 36 sind vom Zugmittel 82 getrennt ausgeführt und davon abnehmbar. Sie werden durch die Schraubbolzen 40 am Zugmittel 82 befestigt. Der Nocken 36 ist im Wesentlichen trapezförmig und besteht aus in sich flexiblem Material. In den Nocken 36 ist eine Ankerplatte 42 eingebettet, die im montierten Zustand dem Zugmittel 82 nah benachbart und parallel dazu orientiert ist, jedoch durch Material des Nockens 36 davon getrennt ist. Die Ankerplatte 42 ist in sich flach und quaderförmig und mit zwei quadratischen Löchern 44 versehen, vgl. Figur 5. Der Nocken 36 umfasst eine axiale, kreiszylindrische Öffnung 46, die sich von der äußeren (in Figur 2 unten eingezeichneten) Fläche des Nockens 36 bis zur Ankerplatte 42 erstreckt.

Der Schraubbolzen 40 ist in der Figur 4 perspektivisch dargestellt. Er umfasst einen kreiszylindrischen, relativ flachen Kopf 48, an den sich ein Bereich 50 des Schraubbolzens 40 mit im Wesentlichen quadratischem Querschnitt (mit abgerundeten Ecken) anschließt. Dieser Bereich 50 kommt im montierten Zustand an den Innenwänden der Löcher 44 der Ankerplatte 42 zur Anlage, während der in der Öffnung 46 angeordnete Kopf 48 axial an der Außenfläche der Ankerplatte 42 anliegt. An den Bereich 50 schließt sich ein kreiszylindrischer Bereich 52 des Schraubbolzens 40 an. Dieser Bereich 52 erstreckt sich im montierten Zustand innerhalb eines Lochs 54 des Zugmittels 82. Die axiale Länge des Bereichs 52 entspricht etwa der Dicke des Zugmittels 82. An den Bereich 52 schließt sich schließlich ein Schaft 56 des Schraubbolzens 40 an, der über seine ganze Länge (wie in den Figuren gezeigt) oder nur einen äußeren, vom Kopf 48 entfernten Bereich (nicht gezeigt) mit einem Gewinde versehen sein kann. Der Schaft 56 erstreckt sich durch eine untere Öffnung 60 der hier als Rechteckprofil ausgeführten Förderleiste 84 und einer an deren Oberseite angebrachten Unterlegscheibe 62, an welcher eine auf das Gewinde des Schafts 56 aufgeschraubte Mutter 64 anliegt. Eine obere Öffnung 60 in der Förderleiste 84 ermöglicht einen Zugang zur Mutter 64, die sich innerhalb des hohlen Rechteckprofils der Förderleisten 84 befindet.

Der Durchmesser des Schafts 56 und auch der Öffnung 60 der Förderleiste 84 ist kleiner als der Durchmesser des Bereichs 54 innerhalb des Lochs 54 des Zugmittels 82. Die Mutter 64 kann somit nicht fester angezogen werden als zur sicheren Befestigung der Förderleiste 84 und des Nockens 36 am Zugmittel 82 nötig ist, sodass letzteres nicht durch ein zu festes Andrehen der Mutter 84 beschädigt werden kann. Anders als in der Figur 2 gezeigt könnte sich der Bereich 52 auch bis kurz vor die in der Figur 2 oben eingezeichnete, äußere Oberfläche des Zugmittels 82 erstrecken.

Die Figur 3 zeigt den Nocken 36 in einer perspektivischen Ansicht. Er ist mit zwei Schraubbolzen 40 ausgestattet, die sich durch zugeordnete, seitlich nebeneinander positionierte Löcher 54 des Zugmittels 82 erstrecken. Durch die zwei Schraubbolzen 40 wird der Nocken 36 drehfest am Zugmittel 82 gesichert.

Nach alledem ergibt sich folgende Vorgehensweise, falls der Schraubbolzen 40 beim Erntebetrieb beschädigt werden sollte, beispielsweise nach Aufnahme eines Steines in den Schrägförderer 20. Nach dem Abschrauben der Muttern 64 und Abnehmen der Unterlegscheiben 62 sowie der Förderleiste 84 (insofern diese Maßnahmen noch nötig sind) kann der gesamte Nocken 36 (d.h. mit den Schraubbolzen 40) vom Zugmittel 82 abgenommen werden. Anschließend wird der zu ersetzende Schraubbolzen 40 bezüglich der in Figur 2 gezeigten Ausrichtung nach unten durch die Öffnung 46 entnommen und durch einen neuen Schraubbolzen 40 ersetzt. Alternativ kann auch der ganze Nocken 36 mit den beiden Schraubbolzen 40 ausgetauscht werden, oder der Nocken 36 bleibt am Zugmittel 82, während nur ein einziger (oder beide) Schraubbolzen 40 getauscht wird. Schließlich wird der Nocken 36 bzw. der Schraubbolzen 40 in die in Figur 2 gezeigte Position verbracht und die Förderleiste 84, die Unterlegscheibe 62 und die Mutter 64 positioniert und letztere festgezogen. Dabei erübrigt sich auf Grund des Formschlusses zwischen dem Bereich 50 des Schraubbolzens 40 und dem Loch 44 ein Festhalten des Schraubbolzens 40 zur Verhinderung einer Drehung um dessen Achse.

In den Figuren 2 und 3 ist die am Zugmittel 82 zur Anlage kommende Fläche des Nockens 36 nicht ganz plan, sondern konkav gewölbt, was eine gewisse Verformung des Nockens 36 und/oder des Zugmittels 82 beim Anziehen der Mutter 64 zur Folge hat, die zur Fixierung des Nockens 36 am Zugmittel 82 beiträgt. Es wäre aber auch denkbar, diese Fläche des Nockens 36 plan zu gestalten.

## Patentansprüche

1. Schrägförderer (20) für einen Mähdrescher (10), umfassend:
ein Gehäuse (76) mit einer unteren Umlenkwalze (78) und einer oberen Umlenkwalze (80), von denen mindestens eine durch einen Antrieb in Drehung um ihre Längsachse versetzbar ist,
und einen Endlosförderer mit wenigstens zwei um die Umlenkwalzen (78, 80) umlaufenden, in axialer Richtung der Umlenkwalzen (78, 80) zueinander versetzten Zugmitteln (82) aus in sich flexiblem Material, zwischen denen sich entlang der Länge der Zugmittel (82) verteilte Förderleisten (84) erstrecken,
wobei die Innenseiten der Zugmittel (82) mit Nocken (34, 36) aus in sich flexiblem Material versehen sind, die mit der antreibbaren Umlenkwalze (78, 80) drehmomentübertragend zusammenwirken,
die Förderleisten (84) durch Schraubbolzen (40) mit den Zugmitteln (82) verbunden sind,
die Schraubbolzen (40) Köpfe (48) aufweisen, die jeweils in einen der Nocken (36) eingebettet sind und an einer in den Nocken (36) integrierten Ankerplatte (42) anliegen,
und die Schraubbolzen (40) sich durch Löcher (44) der Ankerplatte (42) und Löcher (54) des Zugmittels (82) erstrecken,
**dadurch gekennzeichnet, dass** die Schraubbolzen (40) vom Zugmittel (82) abnehmbar und in ihren sich durch die Löcher (44) der Ankerplatten (42) erstreckenden Bereichen (50) gegenüber einer Drehbewegung formschlüssig mit der Ankerplatte (42) gekoppelt sind.

2. Schrägförderer (20) nach Anspruch 1, wobei die mit dem Schraubbolzen (40) versehenen Nocken (36) vom Zugmittel (82) abnehmbar sind und die Schraubbolzen (40) vom Nocken (36) abnehmbar oder unlösbar damit verbunden sind.

3. Schrägförderer (20) nach Anspruch 1, wobei die mit dem Schraubbolzen (40) versehenen Nocken (36) unlösbar mit dem Zugmittel (82) verbunden und die Schraubbolzen (40) vom Nocken (36) abnehmbar sind.

4. Schrägförderer (20) nach einem der Ansprüche 1 bis 3, wobei der Schraubbolzen (40) durch eine innenseitige, dem Kopf (48) des Schraubbolzens (40) benachbarte Öffnung (46) des Nockens (36) hindurch aus dem Nocken (36) entnehmbar ist.

5. Schrägförderer (20) nach einem der vorhergehenden Ansprüche, wobei die axiale Abmessung der Bereiche (52), in denen sich die Schraubbolzen (40) durch die Löcher (54) der Zugmittel (82) erstrecken, zumindest etwa der Dicke des Zugmittels (82) entspricht.

6. Schrägförderer (20) nach Anspruch 5, wobei die Schraubbolzen (40) in ihren sich durch Löcher (54) der Zugmittel (82) erstreckenden Bereichen (52) kreiszylindrisch sind.

7. Schrägförderer (20) nach Anspruch 5 oder 6, wobei der Durchmesser der Schraubbolzen (40) in ihren sich durch Löcher (54) der Zugmittel (82) erstreckenden Bereichen (52) größer als der Gewindedurchmesser der Schraubbolzen (40) und der Durchmesser einer Öffnung (60) in der Förderleiste (84) ist, durch welche sich der Schraubbolzen (40) erstreckt.

8. Schrägförderer (20) nach einem der vorhergehenden Ansprüche, wobei sich Material des Nockens (36) zwischen der Ankerplatte (42) und dem Zugmittel (82) befindet und plan oder konkav gewölbt ist.

9. Mähdrescher (10) mit einem Schrägförderer (20) nach einem der vorhergehenden Ansprüche.

## Claims

1. Inclined conveyor (20) for a combine harvester (10), comprising:
a housing (76) with a lower deflecting roller (78) and an upper deflecting roller (80), of which at least one can be set into rotation about its longitudinal axis by a drive,
and an endless conveyor with at least two traction elements (82) which revolve around the deflecting rollers (78, 80), are offset with respect to each other in the axial direction of the deflecting rollers (78, 80), are composed of inherently flexible material and between which conveyor slats (84) which are distributed along the length of the traction elements (82) extend,
wherein the inner sides of the traction elements (82) are provided with cams (34, 36) composed of inherently flexible material, said cams interacting in a torque-transmitting manner with the driveable deflecting roller (78, 80),
the conveyor slats (84) are connected to the traction elements (82) by studs (40),
the studs (40) have heads (48) which are each embedded in one of the cams (36) and lie against an anchor plate (42) integrated in the cams (36),
and the studs (40) extend through holes (44) in the anchor plate (42) and holes (54) in the traction element (82),
**characterized in that** the studs (40) are removable from the traction element (82) and, in their regions (50) extending through the holes (44) in the anchor plates (42), are coupled in a form-fitting manner in relation to a rotational movement to the anchor plate (42).

2. Inclined conveyor (20) according to Claim 1, wherein the cams (36) which are provided with the studs (40) are removable from the traction element (82), and the studs (40) are removable from the cam (36) or are connected nondetachably thereto.

3. Inclined conveyor (20) according to Claim 1, wherein the cams (36) which are provided with the studs (40) are connected nondetachably to the traction element (82), and the studs (40) are removable from the cam (36).

4. Inclined conveyor (20) according to one of Claims 1 to 3, wherein the stud (40) is removable from the cam (36) through an inside opening (46) in the cam (36), said opening being adjacent to the head (48) of the stud (40).

5. Inclined conveyor (20) according to one of the preceding claims, wherein the axial dimensioning of the regions (52) in which the studs (40) extend through the holes (54) in the traction elements (82) at least approximately corresponds to the thickness of the traction element (82).

6. Inclined conveyor (20) according to Claim 5, wherein the studs (40) are circular-cylindrical in their regions (52) extending through holes (54) in the traction elements (82).

7. Inclined conveyor (20) according to Claim 5 or 6, wherein the diameter of the studs (40) in their regions (52) extending through holes (54) in the traction elements (82) is larger than the thread diameter of the studs (40) and the diameter of an opening (60) in the conveyor slat (84), through which opening the studs (40) extend.

8. Inclined conveyor (20) according to one of the preceding claims, wherein the material of the cam (36) is located between the anchor plate (42) and the traction element (82) and is flat or curved concavely.

9. Combine harvester (10) with an inclined conveyor (20) according to one of the preceding claims.

## Revendications

1. Convoyeur incliné (20) pour une moissonneuse-batteuse (10), comprenant :
un boîtier (76) avec un cylindre déflecteur inférieur (78) et un cylindre déflecteur supérieur (80), dont au moins l'un peut être mis en rotation autour de son axe longitudinal par un entraînement,
et un convoyeur sans fin avec au moins deux moyens de traction (82) circulant autour des cylindres déflecteurs (78, 80), décalés l'un par rapport à l'autre dans la direction axiale des cylindres déflecteurs (78, 80), constitués de matériau flexible en soi, entre lesquels s'étendent des barres de transport (84) réparties le long de la longueur des moyens de traction (82),
les côtés intérieurs des moyens de traction (82) étant pourvus de cames (34, 36) en matériau flexible en soi, qui coopèrent avec le cylindre déflecteur pouvant être entraîné (78, 80) avec transmission du couple,
les barres de transport (84) étant connectées aux moyens de traction (82) par des boulons filetés (40),
les boulons filetés (40) présentant des têtes (48) qui sont à chaque fois encastrées dans l'une des cames (36) et qui s'appliquent contre une plaque d'ancrage (42) intégrée dans les cames (36),
et les boulons filetés (40) s'étendant à travers des trous (44) de la plaque d'ancrage (42) et des trous (54) du moyen de traction (82),
**caractérisé en ce que** les boulons filetés (40) peuvent être retirés du moyen de traction (82) et sont accouplés par engagement par correspondance de formes avec la plaque d'ancrage (42) dans leurs régions (50) s'étendant à travers les trous (44) des plaques d'ancrage (42) pour empêcher un mouvement de rotation.

2. Convoyeur incliné (20) selon la revendication 1, dans lequel les cames (36) pourvues des boulons filetés (40) peuvent être enlevées du moyen de traction (82) et les boulons filetés (40) peuvent être enlevés de la came (36) ou sont connectés de manière imperdable à celle-ci.

3. Convoyeur incliné (20) selon la revendication 1, dans lequel les cames (36) pourvues des boulons filetés (40) sont connectées de manière imperdable au moyen de traction (82) et les boulons filetés (40) peuvent être enlevés de la came (36).

4. Convoyeur incliné (20) selon l'une quelconque des revendications 1 à 3, dans lequel le boulon fileté (40) peut être enlevé de la came (36) par une ouverture (46) de la came (36) du côté intérieur, adjacente à la tête (48) du boulon fileté (40).

5. Convoyeur incliné (20) selon l'une quelconque des revendications précédentes, dans lequel la dimension axiale des régions (52) dans lesquelles s'étendent les boulons filetés (40) à travers les trous (54) des moyens de traction (82) correspond approximativement à l'épaisseur du moyen de traction (82).

6. Convoyeur incliné (20) selon la revendication 5, dans lequel les boulons filetés (40) sont cylindriques circulaires dans leurs régions (52) s'étendant à travers des trous (54) du moyen de traction (82).

7. Convoyeur incliné (20) selon la revendication 5 ou 6, dans lequel le diamètre des boulons filetés (40) dans leurs régions (52) s'étendant à travers des trous (54) des moyens de traction (82) est supérieur au diamètre de filetage des boulons filetés (40) et au diamètre d'une ouverture (60) dans la barre de transport (84) à travers laquelle s'étend le boulon fileté (40).

8. Convoyeur incliné (20) selon l'une quelconque des revendications précédentes, dans lequel le matériau de la came (36) se trouve entre la plaque d'ancrage (42) et le moyen de traction (82) et présente une courbure plane ou concave.

9. Moissonneuse-batteuse (10) comprenant un convoyeur incliné (20) selon l'une quelconque des revendications précédentes.
